**Europäisches Patentamt**

**European Patent Office**

**Office européen des brevets**

(19)

(11) Veröffentlichungsnummer: **0 214 432**
**B1**

(12) **EUROPÄISCHE PATENTSCHRIFT**

(45) Veröffentlichungstag der Patentschrift:
**27.09.89**

(51) Int. Cl.⁴: **C01B 3/38, B01J 8/06**

(21) Anmeldenummer: **86110208.5**

(22) Anmeldetag: **24.07.86**

(54) Vorrichtung zur Erzeugung von Synthesegas.

(30) Priorität: **11.09.85 DE 3532413**

(43) Veröffentlichungstag der Anmeldung:
**18.03.87 Patentblatt 87/12**

(45) Bekanntmachung des Hinweises auf die Patenterteilung:
**27.09.89 Patentblatt 89/39**

(84) Benannte Vertragsstaaten:
**AT BE CH DE FR GB IT LI NL SE**

(56) Entgegenhaltungen:
**DE-A- 3 244 252**
**GB-A- 2 017 144**
**GB-A- 2 153 382**
**US-E- 24 311**

(73) Patentinhaber: **Uhde GmbH, Friedrich-Uhde-Strasse 15, D-4600 Dortmund 1(DE)**

(72) Erfinder: **Herbort, Hans-Joachim, Dipl.-Ing., Unnaer Strasse 65 B, D-5758 Fröndenberg(DE)**
Erfinder: **Marsch, Hans-Dieter, Dipl.-Ing., Overhoffstrasse 193, D-4600 Dortmund(DE)**

**Beschreibung**

Die Erfindung betrifft eine Vorrichtung zur Erzeugung von Synthesegas unter erhöhtem Druck aus Kohlenwasserstoffen, insbesondere Erdgas, Naphtha und/oder Raffineriegas in einem katalytischen, endothermen Reformierteil mit einem zylindrischen Druckbehälter, und einer Vielzahl von außen beheizten mit Katalysator gefüllten Reformerrohren, wobei in die in einer Rohrbodenplatte gehaltenen Reformerrohre ein Gemisch aus Kohlenwasserstoffen und Wasserdampf eintritt und aus ihnen ein Reformiergas austritt und in einem anschließenden im Durchmesser zum vorgenannten Reformierteil vergrößerten Partial-Oxidationsteil in Druckbehälterform mit geschlossenem Ende, in den die Reformerrohre mit den freien Enden hineinragen und in den das Reformiergas aus den Reformerrohren sowie zusätzliche Kohlenwasserstoffe und Sauerstoff oder sauerstoffenthaltendes Gas eingeführt werden, weiter behandelt wird. Unter erhöhtem Druck ist solcher von z.B. 30 bar und höher zu verstehen.

Das Synthesegas, was im wesentlichen Wasserstoff und Kohlenoxide enthält, ist Grundstoff für eine Reihe wichtiger großtechnischer Synthesen, wie z.B. für die Erzeugung von Methanol oder Ammoniak. Auch Wasserstoff allein kann nach entsprechender Synthesegasaufbereitung erzeugt werden.

Es sind Vorrichtungen zur Erzeugung von Synthesegas gemäß dem Oberbegriff des Patentanspruchs bekannt, in denen die Verfahrensschritte
katalytische endotherme Dampfreformierung (I) und
partielle autotherme Oxidation (II) ablaufen
und bei denen zur Beheizung der mit Katalysator gefüllten Reformerrohre die heißen Reaktionsgase aus der partiellen Oxidation (II) eingesetzt werden.

So ist aus DE-OS 32 44 252 eine Vorrichtung bekannt, bei der eine erste Teilmenge Kohlenwasserstoffe mit Dampf gemischt wird und in Gegenwart von Katalysator in den Reformerrohren der Dampfreformierreaktion unterworfen wird. Das Produktgas dieser Teilreaktion strömt aus den Reformerrohren, die senkrecht hängend in einem zylindrischen ausgemauerten Gefäß angeordnet sind in einen unterhalb der Rohraustrittsebene vorgesehenen freien Teil desselben Gefäßes, im folgenden Mischkammer genannt. Die Temperatur des Gases aus der Teilreaktion (I) beträgt in der Regel mehr als 700°C. Die zweite Teilmenge Kohlenwasserstoffe, die weder der Menge noch der Art nach identisch sein muß mit der ersten Teilmenge, wird gleichzeitig mit einem Sauerstoff- oder sauerstoffhaltigen Strom der Mischkammer zugeführt. Dort reagieren sie miteinander als Teilreaktion (II). An dieser Teilreaktion (II) nehmen auch Gase teil, die in der Mischkammer die unmittelbare Umgebung der zugeführten Reaktionsteilnehmer bilden.

Die Temperatur des Gases aus der Teilreaktion (II), vorwiegend im Bereich zwischen 1400 und 2100 °C, liegt erheblich über der des Gases aus der Teilreaktion (I). In dem Mischraum sollen sich nun die Gasströme aus den Teilreaktionen (I) und (II) vollständig vermischen und eine Mischtemperatur annehmen. Dabei kommt es erneut zu Gleichgewichtsreaktionen, den Teilreaktionen (III). Die sich einstellende Temperatur liegt dann oberhalb von 950°C, bevorzugt bei 1100°C. Sie bestimmt die Zusammensetzung des erzeugten Synthesegases. Dieses Gas strömt im Gegenstrom zu den Gasen aus der Teilreaktion (I) in das Rohrfeld der katalytischen Reformersektion ein und gibt dort fühlbare Wärme an die Reformerrohre ab, zur Durchführung der Teilreaktion (I).

Die Teilreaktion (I) liefert ein Gas mit hohem Restmethangehalt, die Teilreaktion (II) ein Gas, das praktisch frei von Methan ist, und die Teilreaktion (III) ein Gas mit dem angestrebten und ihrer Reaktionstemperatur zugeordneten Methangehalt, z.B. kleiner 1%, bevorzugt kleiner 0,5%. Diese Reaktionstemperatur und die daraus berechenbare Gaszusammensetzung stellt sich jedoch nur dann ein, wenn die Mischung der Gase aus den Teilreaktionen (I) und (II) vollständig ist, d.h. keine Gassträhnen vorliegen. Zur optimalen Durchführung des Verfahrens ist daher eine vollständige Mischung unbedingt erforderlich, bevor das Synthesegas in die Kühlstrecke (Reformerrohrfeld) eintritt.

Die Vorrichtung gemäß DE-OS 32 44 252 liefert keine ausreichende Mischgüte der Gasströme.

Aus US-Re 24 311 ist eine Vorrichtung zur Erzeugung von Synthesegas bekannt, bei der die Kohlenwasserstoffe im Gemisch mit Dampf zunächst einer begrenzten katalytischen endothermen Dampfreformierung unterzogen werden. Dazu sind in einem zylindrischen Druckbehälter teilweise mit Katalysator gefüllte Reformerrohre angeordnet. Zentral in den Reformerrohren sind Sauerstoffleitungen angeordnet, so daß am Austritt der Reformerrohre die teilweise gespaltenen Kohlenwasserstoffe mit dem aufgeheizten Sauerstoff gemischt und einer partiellen autothermen Oxidation unterzogen werden. Der untere Teil des zylindrischen Druckbehälters ist zu einem freien Reaktionsraum erweitert. Aus dem freien Reaktionsraum strömen die Reaktionsgase, nach Richtungsumkehr nach oben, um die Reformerrohre aufzuheizen. Die Durchführung der Sauerstoffrohre durch die heißgehenden Reformerrohre ist betriebstechnisch und metallurgisch sehr problematisch, weswegen diese Vorrichtung auch keine Anwendung gefunden hat. Darüber hinaus ist sie nicht universell einsetzbar für verschiedene Einsatzstoffe und für die Aufteilung der Einsatzkohlenwasserstoffe auf zwei Teilreaktionen.

Der Erfindung liegt die Aufgabe zugrunde, eine Vorrichtung zu finden, in der die erforderlichen thermischen Reaktionen betriebstechnisch sicher und weitgehend vollständig ablaufen und mit der die Teilreaktionen steuerbar sind, um Synthesegase verschiedener Zusammensetzungen zu erhalten.

Die Aufgabe wird erfindungsgemäß gelöst durch die Ausbildung der Vorrichtung gemäß den kennzeichnenden Merkmalen des Hauptanspruchs in Verbindung mit den Kennzeichen der Unteransprüche.

Die mit der Erfindung erzielten Vorteile bestehen darin, daß im Partial-Oxidationsteil, d.h. in der Mischkammer, eindeutige Strömungsverhältnisse erhalten werden. Die besondere erfindungsgemäße Zuführung der Reaktionspartner, wie Reformiergas, zusätzliche Kohlenwasserstoffe und Sauerstoff bzw. sauerstoffenthaltenes Gas, erzeugt in der Mischkammer einen achsparallelen Wirbel derart, daß im Zentrum dieses Wirbels ein Unterdruckgebiet entsteht, durch das das Reformiergas aus den Reformerrohrenden, d.h. der katalytischen endothermen Dampfreformierung, in den unteren Teil der Mischkammer geschleust wird. Dabei vermischt sich dieses Reformiergas intensiv mit dem Partial-Oxidationsgas aus den Zuführeinrichtungen und bildet das Synthesegas. Der größte Teil des Mischgases bzw. Synthesegases im äußeren Bereich der Schlaufenströmung tritt durch die freien Flächen zwischen den Zuführungseinrichtungen in Richtung Reformierteil aus dem Partial-Oxidationsteil aus. Das hier austretende heiße Synthesegas umströmt dann die Reformerrohre und gibt die für die endotherme Reaktion erforderliche Wärmemenge an das in den Rohren strömende Gemisch ab.

Für die Funktionsfähigkeit der Vorrichtung ist es egal, ob der Reformierteil oberhalb oder unterhalb des Partial-Oxidationsteils angeordnet ist. Wesentlich ist, daß gewisse Randbedingungen eingehalten werden unter Berücksichtigung des zu behandelnden Gases. So muß z.B. die Teilung t der Öffnung in der Austrittsebene der Reformerrohre der Forderung genügen:

$t \leq d + 0,317 \times h$

wodurch vermieden wird, daß es zu unerwünschten Gasrückströmungen in das Rohrfeld kommt. In der obigen Formel ist d = der innere Düsendurchmesser in der Austrittsebene der Refermerrohre.

$$h = \frac{m_1}{m_0} \quad \frac{\varphi_0}{\varphi_1} \quad \frac{d}{0.32}$$

Darin ist $m_0$ der Massenstrom, der einer Öffnung in der Austrittsebene der Reformerrohre entströmt,
$m_1$ der Massenstrom, der durch den Strahl $m_0$ eingesaugt wird,
$\varphi_1$ und $\varphi_0$ die Dichten der jeweiligen Massenströme und
d der innere Düsendurchmesser in der Austrittsebene der Reformerrohre.

Die Reynoldszahl der Strömung der Einzelstrahlen am Austritt aus den Reformerrohren soll größer als $5 \times 10^3$ vorzugsweise größer als $5 \times 10^4$ sein. Die daraus resultierenden Impulse bewirken das Eindringen dieser Gasströme in den Wirbel und im wesentlichen durch das Innere des Wirbels hindurch in den unteren Teil der Mischkammer. Diese Strömung erzeugt auch die dem Wirbelring innewohnende walzenförmige Bewegung, durch die die Gase an der Peripherie der Mischkammer im wesentlichen spiralförmig aufwärts zurückbefördert werden.

Die für die Zuführungseinrichtungen charakteristische Reynoldszahl am Austritt der Düsen soll größer als $4 \times 10^3$ vorzugsweise größer als $4 \times 10^4$ sein. Gebildet wird sie aus einer fiktiven Ausströmgeschwindigkeit, einem fiktiven Durchmesser und der mittleren Zähigkeit der beteiligten Gase, wobei sich die fiktiven Größen aus der Impulsgleichheit und der Volumenstromgleichheit ergeben. Die fiktiven Größen resultieren aus der konstruktiven Gestaltung der der Mischkammer zugewandten Enden der Zuführungseinrichtungen. Die Strömungscharakteristiken der zugeführten Medien müssen stets gewahrt werden. Dann verursachen Änderungen der Eintrittsgeschwindigkeiten, die bei Laständerungen oder zur Steuerung der Produktgaskomposition unerläßlich sind, keine Änderungen des Strömungsmusters in der Mischkammer und daher auch keine Änderung der Güte der Reaktionsführung.

Die Zuführungseinrichtungen für Kohlenwasserstoffe und/oder Sauerstoff oder Sauerstoff enthaltendes Gas sind so in der Wand des Partial-Oxidationsteils angebracht, daß die Austrittsrichtungen der Gasstrahlen

a) mit dem jeweiligen Radialstrahl einen Winkel von 1° bis 30° bilden, vorzugsweise 5° bis 20° und
b) zur Radialebene einen Winkel von +5° bis −15°, vorzugsweise 0° bis −10°, bilden,
c) daß der Abstand h der Verbindungslinie zweier Zuführungseinrichtungen zur Ebene der Reformerrohrenden das 0,15- bis 1fache des Hüllkreisdurchmessers des Reformerrohrfeldes ist.

In der Ausrichtung der Zuführungseinrichtungen in bezug ihrer Achse zur waagerechten Mischkammerebene bedeutet ein Pluszeichen eine Abweichung in Richtung der Reformerrohrfelder.

Die Reaktionspartner müssen in der Mischkammer genügend lange verweilen, um die angestrebte Annäherung an das Gleichgewicht der Reaktion (III) zu erreichen. Das wird dadurch erzielt, daß die Tiefe dieser Kammer bei gegebenem Durchmesser eine Verweilzeit von mindestens 4 Sekunden erlaubt. Der Durchmesser der Mischkammer soll mindestens dem 1,1-fachen des Hüllkreisdurchmessers des Rohrfeldes entsprechen und dieser Durchmesser soll sich erst im Bereich des Rohrfeldes reduzieren. So wird erreicht, daß das Produktgas aus der Teilreaktion (III) unbehindert von den Gasen aus den Teilreaktion (I) radial und aufwärts in das Rohrfeld einströmen kann. Wird der Durchmesser jedoch zu groß, kann das Strömungsmuster verloren gehen.

Darüber hinaus neigt bekanntermaßen das Synthesegas aus der Teilreaktion (III) dazu, bei langsamer Abkühlung eine den sich ändernden Gleichgewichtsbedingungen entsprechende Gaszusammensetzung mit höherem Methangehalt anzunehmen. Das aber würde einen Teil der erzielten Reformierung rückgängig machen. Es ist daher zur Durchführung des Verfahrens notwendig, das Produktgas aus dem gewünschten Gleichgewichtszustand so schnell abzukühlen, daß dieser Zustand gleichsam eingefroren wird. Diese Stabilisierung ist erfahrungsgemäß erreicht bei Temperaturen unter 600°C.

Um für die Reformerrohre eine gleichmäßige und wirkungsvolle Aufheizung durch das heiße Synthesegas zu erreichen, wird eine hohe Abkühlungsgeschwindigkeit eingestellt. Hierdurch werden gleichzeitig Methanrückbildung und Kohlenstoffablagerungen vermieden. Die Reformerrohre werden dazu ab einer gewissen Distanz von der Austrittsebene der Reformerrohre an mit Hüllrohren versehen. Zwischen den Hüllrohren und den Reformerrohren strömt das heiße Synthesegas im Ringspalt.

Die erfindungsgemäße Vorrichtung erlaubt darüber hinaus die Anwendung einer bekannten verfahrenstechnischen Variante, und zwar den Einsatz einer katalytischen Reaktion als Abschluß der Erzeugung von Synthesegas. Dazu wird der Raum zwischen den Austrittsenden der Reformerrohre derart mit Katalysator gefüllt, daß das dort einströmende Synthesegas diesen Katalysator passieren muß. Diese nachgeschaltete katalytische autotherme Teilreaktion bewirkt eine stärkere Annäherung an das Methangleichgewicht, wodurch der Restmethangehalt des Synthesegases sinkt, bzw. die Temperatur aus den vorherigen Reaktionen niedriger gehalten werden kann.

Ein weiterer Vorteil der eingeplanten Katalysatorschicht besteht darin, daß eventuelle Unvollkommenheiten in Mischung und Reaktion des in diese Schicht eintretenden Gases ausgeglichen werden. Anschließend an die Katalysatorschicht kann eine Füllung von inerten Füllkörpern folgen bzw. eine spezielle Tragkonstruktion mit Hüllrohren für die Reformerrohre.

Die Ausgestaltung der Austrittsenden bzw. der Düsen der Reformerrohre ist nicht Gegenstand der Erfindung. Sie ist frei wählbar gemäß dem Stand der Technik.

Ausführungsbeispiele der Erfindung sind in den Zeichnungen dargestellt und werden wie folgt beschrieben: Es zeigen:

Fig. 1 Reaktor mit hängenden Reformerrohren im Schnitt
Fig. 2 Reaktor mit stehenden Reformerrohren im Schnitt
Fig. 3 Querschnitt des Reaktors im Bereich der Zuführungseinrichtungen
Fig. 4 Mischkammerschnitt mit abgewinkelten Zuführungseinrichtungen
Fig. 5 Zuführungseinrichtung im Schnitt

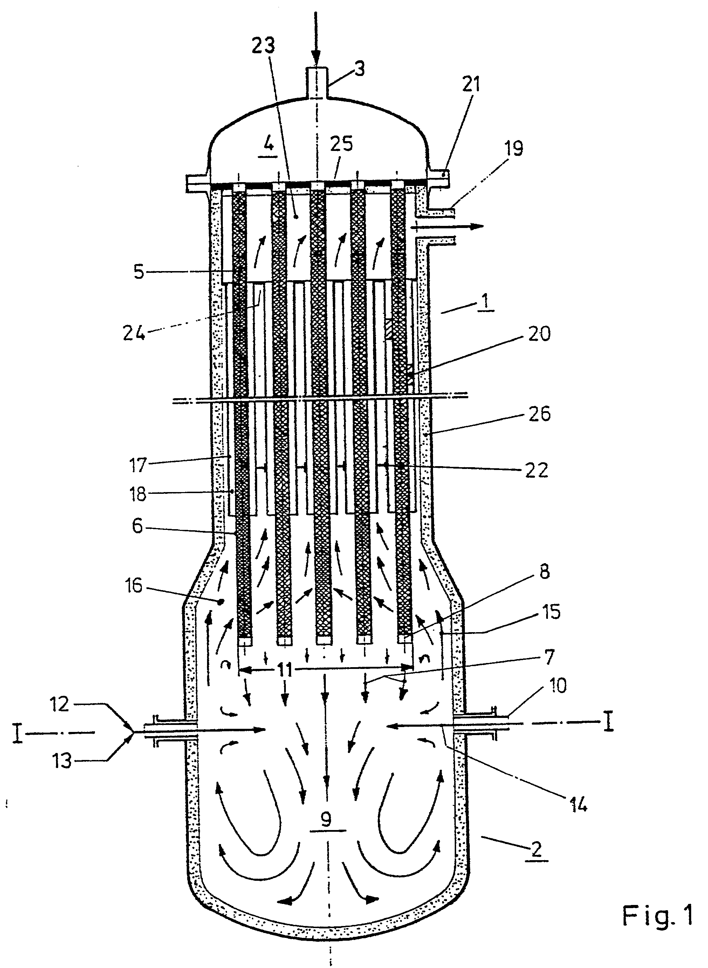

Der Reaktor nach Fig. 1 besteht aus dem Reformierteil 1 und dem Oxidationsteil 2 für die partielle Oxidation. In den Reformierteil 1 tritt über den Eintrittsstutzen 3 die erste Teilmenge Kohlenwasserstoffe vermischt mit Dampf in die Eintrittskammer 4 ein und verteilt sich auf die mit Katalysator 5 gefüllten Reformerrohre 6. Diese werden durchströmt unter Wärmeaufnahme und Umwandlung gemäß der katalytischen Dampfreformier-Reaktion, der Teilreaktion (I). Das Reformiergas 7 aus der Teilreaktion (I) strömt mit hoher Geschwindigkeit aus den Düsen 8 in den Mischraum 9 ein. Die Austrittsgeschwindigkeit sowie Teilung, Durchmesser und Anordnung der Düsen 8 sind von großer Bedeutung für den erforderlichen Abstand der Ebene der Düsen von der Ebene der Zuführeinrichtungen 10. Die Austrittsgeschwindigkeit, Düsendurchmesser und Anordnung der Zuführeinrichtungen 10 zusammen mit dem Verhältnis des lichten Durchmessers der Mischkammer 9 zum Durchmesser des Hüllkreises 11 um die Reformerrohre 6 gewährleisten die Existenz des gewünschten und im wesentlichen durch Pfeile in den Figuren 1, 2, 3 und 4 angedeuteten Strömungsmusters. Die genügende Ausdehnung der Mischkammer 9 in axialer Richtung ist Voraussetzung für die benötigte Verweilzeit der reagierenden Gase in diesem Bereich.

Die durch die Zuführungseinrichtungen 10 eingebrachten Medien, wie das Oxidationsmittel 12 und die zweite Kohlenwasserstoffteilmenge 13, die zusätzlich Dampf enthalten können, reagieren sowohl untereinander als auch mit Gasen der Umgebung in Form der partitiellen Oxidation.

Richtung, Geschwindigkeit und Masse der eingebrachten Medien erzeugen in der Mischkammer 9 einen Wirbel mit vertikaler Achse und mit einem Bereich minderen Druckes in seinem Zentrum. Die bestimmte Anordnung der wirbelerzeugenden Zuführungseinrichtungen 10 zu den Düsen 8 bewirkt, daß das Reformiergas aus den Düsen 8 in den unteren Teil der Mischkammer 9 geschleust wird und daß das Reformiergas 7 und Oxidationsgas 14 in fortlaufender Vermischung und Reaktion innen spiralförmig abströmt, in der Nähe des Mischkammerbodens umgelenkt wird und in Richtung des berohrten Reaktionsteiles spiralförmig zurückströmt, um schließlich als Synthesegas aus dem von der Reaktorwand und dem Reformerrohrfeld gebildeten ringförmigen Raum 16 im wesentlichen radial und aufwärts in das Rohrfeld einzutreten.

Ringraum 16, der sich im Bereich der nichtumhüllten Reformerrohre 6 verjüngt, gewährleistet, daß die Gase 15 unbehindert von den Gasen 7 in der genannten Form einströmen können. In diesem Bereich geben die Synthesegase 15 ihre Wärme im wesentlichen durch Strahlung an die Reformerrohre 6 ab. Nach Eintritt in die Hüllrohre 17 ist der Wärmeübergang an die Reformerrohre in erster Linie konvektiv. Die Ringspalte 18 zwischen den Hüllrohren 17 und den Reformerrohren 6 werden so gewählt, daß das Synthesegas 15 in ausreichend kurzer Zeit abgekühlt wird. Die dabei eingestellten Strömungsgeschwindigkeiten gewährleisten einen sehr guten Wärmeübergang auf die Reformerrohre 6. Das Synthesegas 15 verläßt möglichst weit abgekühlt die Vorrichtung am Stutzen 19. Die Ringspalte 18 werden durch Distanzgeber 20 wie z.B. Wendeln, achsparallele Schienen, Drähte oder Nocken eingestellt und gesichert. Um eine möglichst gleichmäßige Verteilung des Synthesegases 15 auf alle Ringspalte 18 zu erzielen, sind die Reformerrohre außen und die Hüllrohre 17 innen vorzugsweise im Bereich der Ringspalte bearbeitet. Die Distanzgeber 20 erlauben eine unterschiedliche Dehnung von Hüllrohr und Reformerrohr. Sie erlauben ferner, daß die Reformerrohre einzeln oder gemeinsam nach Öffnen des Flansches 21 aus den Hüllrohren entfernt bzw. in sie eingesetzt werden können.

Die Hüllrohre sind untereinander auf mindestens einer Ebene gegeneinander abgestützt. Diese Abstützungen 22 erlauben jedem Hüllrohr sich individuell zu dehnen.

Die Hüllrohre 17 sind auf der einen Seite zum Partial-Oxidationsteil 2 bzw. zur Mischkammer 9 hin und auf der anderen Seite zur Auslaßkammer 23 hin offen. Dies gewährleistet die Druckentlastungen der Trennplatte 24. Die Trennwand 25 ist der Rohrboden für die Reformerrohre 6.

Wegen der hohen Temperaturen in beiden Reaktorteilen sind diese mit einer geeigneten Feuerfestauskleidung 26 versehen. Mindestens die dem heißen Gas zugekehrte Seite der Auskleidung soll wegen der reduzierenden Gasatmosphäre technisch frei von $SiO_2$ sein. Um den Druckmantel der Vorrichtung darüber hinaus oder in einem Notfalle vor hohen Temperaturen zu schützen, kann die Vorrichtung in bekannter Weise mit einem Wassermantel oder einer Sprenkler-Anlage versehen werden.

Die Fig. 1 zeigt die Vorrichtung mit untenliegendem Partial-Oxidationsteil 2 und hängenden Reformerrohren 6. Nach Einsetzen von Katalysatorrosten am Eintritt der Reformerrohre kann die Vorrichtung auch in umgekehrter Position installiert und betrieben werden.

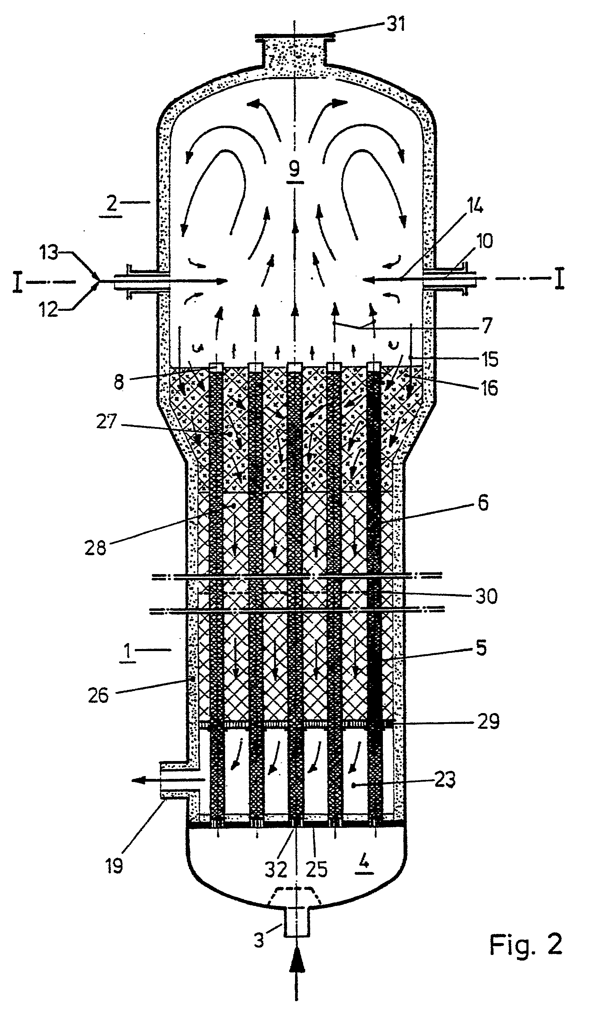

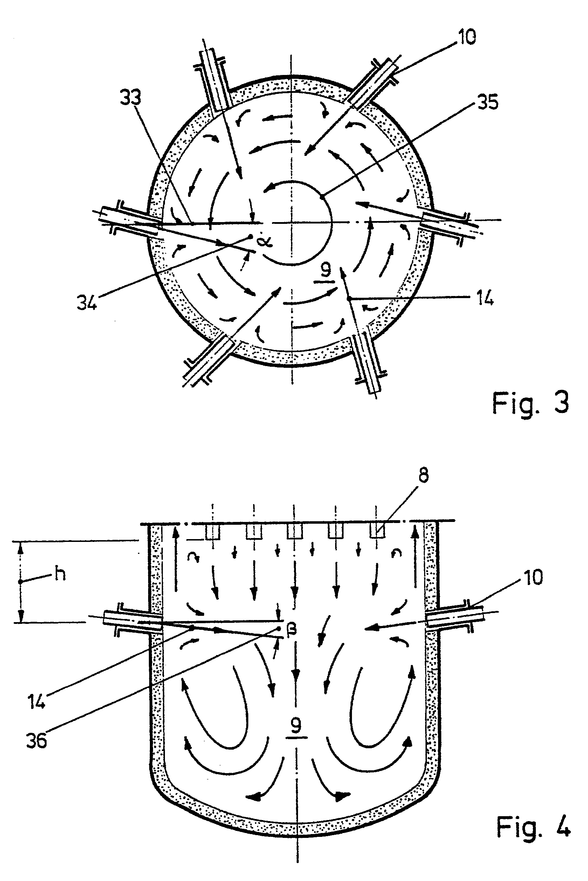

Figur 2 stellt eine Variante der Vorrichtung im Längsschnitt gemäß der Erfindung dar. Hierbei tritt die erste Teilmenge Kohlenwasserstoffe vermischt mit Dampf bei 3 in die Eintrittskammer 4 ein und verteilt sich auf die mit Katalysator 5 gefüllten Rohre 6. Diese werden durchströmt unter Wärmeaufnahme und Umwandlung gemäß der katalytischen Dampfreformierreaktion, der Teilreaktion (I). Das Gas 7 aus der Teilreaktion (I) strömt mit hoher Geschwindigkeit aus den Düsen 8 in die Mischkammer 9 ein. Diese Austrittsgeschwindigkeit sowie Teilung, Durchmesser und Anordnung der Düsen 8 sind von großer Bedeutung für den erforderlichen Abstand der Ebene der Düsen 8 von der Ebene der Zuführungseinrichtungen 10. Die Ausströmungsgeschwindigkeiten, Düsendurchmesser und Anordnung der Zuführungseinrichtungen 10 zusammen mit dem Verhältnis des lichten Durchmessers der Mischkammer 9 zum Durchmesser des Hüllkreises um die Reformerrohre 6 gewährleisten die Existenz des gewünschten und im wesentlichen durch Pfeile in den Figuren 2 und 3 angedeuteten Strömungsmusters. Die genügende Ausdehnung der Mischkammer 9 in axialer Richtung bewirkt schließlich die benötigte Verweilzeit der reagierenden Gase in diesem Bereich.

Die durch die Zuführungseinrichtungen 10 eingebrachten Medien, das Oxidationsmittel 12 und die zweite Kohlenwasserstoffmenge 13, die auch Dampf enthalten können, reagieren sowohl untereinander als auch mit Gasen der Umgebung. Sie liefern das Gas 14 der Teilreaktion (II). Richtung, Geschwindigkeit und Masse der eingebrachten Medien erzeugen in der Mischkammer 9 einen Wirbel mit vertikaler Achse und mit einem Bereich minderen Druckes in seinem Zentrum. Die bestimmte Anordnung der wirbelerzeugenden Zuführungseinrichtungen 10 zu den Düsen 8 bewirkt, daß die Gase 7 aus den Düsen 8 im wesentlichen durch das Zentrum des Wirbels hindurch in den unteren Teil der Mischkammer geschleust werden und daß die Gase 7 und 14 in fortlaufender Vermischung und Reaktion spiralförmig in der Nähe der Mischkammerperipherie in Richtung des berohrten Reaktorteiles zurückströmen, um schließlich in den von der Reaktorwand und dem Reformerrohrfeld begrenzten, ringförmigen und mit Katalysator 27 gefüllten Raum 16 einzutreten und die Katalysatorschicht zu durchströmen.

Der Katalysator bewirkt eine bessere Annäherung an das Methangleichgewicht, wodurch sich der Restmethangehalt des Gases weiter reduziert. Außer dem Wärmebedarf für diese Reaktion (IV) liefert das Gas Wärme an die im Katalysatorbett angeordneten Reformerrohre 6. Die Wärmeabgabe an die Reformerrohre 6 in diesem Bereich läßt sich den Erfordernissen der Reaktion (IV) anpassen, z.B. durch eine innere oder äußere Isolierung und/oder eine Durchmesserreduzierung der Rohre, bzw. durch die geeignete Wahl der Reformerrohrteilung, durch die Größe des Ringraumes 16 und/oder das gewählte Katalysatorvolumen. Das die Katalysatorschicht 27 mit hoher Temperatur verlassende Gas durchströmt eine Schüttung nicht-katalytischer Körper, z.B. Füllkörper 28, unter weiterer Abgabe seiner fühlbaren Wärme an die Rohre 6. Es tritt als abgekühltes Produktgas durch die Lochwand 29 in die Auslaßkammer 23 ein und von dort bei 19 aus.

Durch die Wahl von nach Form und Material geeigneten Füllkörpern 28 kann sowohl der gewünschte Wärmeübergang als auch die gewünschte Abkühlgeschwindigkeit erreicht werden. Weitere mögliche Mittel zur Erreichung dieser Ziele sind z.B. die Wahl der Rohrteilung, der Gebrauch von großen Verdrängungskörpern oder der Einsatz Oberflächen vergrößerter Rohre 6.

Die Katalysatorschicht 27 ruht auf den Füllkörpern 28, diese wiederum werden von der Lochwand 29 getragen. Die Lochwand 29 ist an den Reformerrohren 6 abgestützt. Es ist auch möglich, diese Abstützung direkt auf der Trennwand 25 oder an der Wandung des Reaktors vorzunehmen. Die Reformerrohre 6 sind durch mindestens eine perforierte und sektionierte Distanzplatte 30 in ihrer Teilung fixiert, so daß jedes Rohr sich individuell dehnen kann. Die Distanzplatte 30 wird durch die Füllkörper getragen.

Die Vorrichtung zeichnet sich auch dadurch aus, daß ein großer Apparateflansch 21 wie in Fig. 1 nicht erforderlich ist. Der Katalysator 5 und 27 sowie die Füllkörper 28 können über das Mannloch 31 abgesaugt werden. Der Katalysator 5 kann auch über ein Mannloch in der Kammer 4 ausgeschleust werden, wenn der Katalysatorrost 32 herausnehmbar gestaltet wird.

Figur 3 zeigt die Vorrichtung der Fig. 1 bzw. Fig. 2 im Schnitt entlang der Linie I-I. Es sind 6 Zuführungseinrichtungen 10 im gleichen Abstand am Umfang der Mischkammer 9 so angeordnet, daß die Richtung ihrer Austrittsdüsen, angegeben durch die Richtungen der Gasstrahlen 14, mit den Richtungen der jeweiligen Radialstrahlen, z.B. Radialstrahl 33, einen Winkel $\alpha$ 34 bilden. Die Gasstrahlen 14 erzeugen den gewünschten Wirbel 35, der durch Strömungspfeile im wesentlichen angedeutet ist.

Figur 4 zeigt die Vorrichtung der Fig. 1 bzw. 2 im Bereich der Mischkammer im Längsschnitt. Die Gasstrahlen 14 treten um den Winkel $\beta$ 36 gegen die Horizontale geneigt in die Mischkammer 9 ein. Die Düsen der Zuführungsvorrichtungen 10 spannen eine Ebene auf, in der alle Horizontalen liegen. Der Abstand h zwischen dieser Ebene und der Ebene, die durch die Düsen an den Reformerrohrenden 8 gebildet wird, ist wichtig für das durch die Pfeile im wesentlichen angedeutete Strömungsmuster, das durch den in Fig. 3 dargestellten Wirbel 35 überlagert wird. Im Bedarfsfall können auch Zuführungseinrichtungen auf mehr als einer Ebene angeordnet werden.

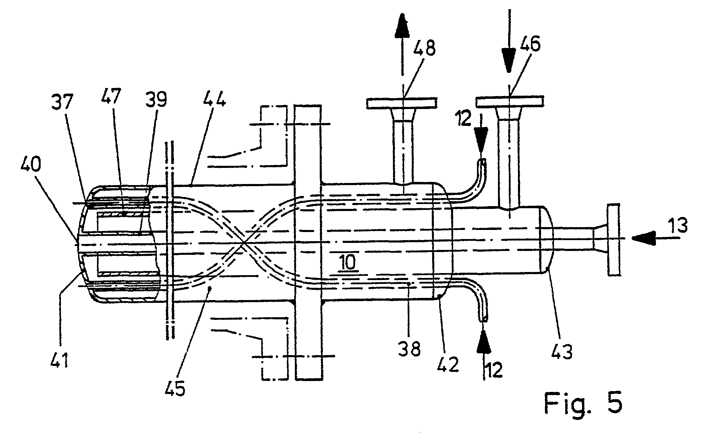

Figur 5 zeigt die Zuführungseinrichtung 10 in Einzeldarstellung. Die zu den Düsen 37 führenden Leitungen 38 für das Oxidationsmittel 12 sind getrennt in die Zuführungsvorrichtung 10 hineingeführt. Ebenso wird die zweite Teilmenge Kohlenwasserstoffe 13 einzeln über die Leitung 39 der Düse 40 zugeführt. Nach Eintritt in die Zuführungseinrichtung sind alle Leitungen 38 und 39 von einem zylindrischen Mantel umgeben, der mit dem die Düsenwand bildenden Boden 41, der der Mischkammer 9 zugewandt ist und einem Boden 42 bzw. 43 verschweißt ist. Die Durchtritte der genannten Leitungen durch die Böden 41, 42 und 43 sind ebenfalls verschweißt. Der so von dem Mantel 44, den genannten Böden und den genannten Leitungen begrenzte Hohlraum 45 wird mit Wasser durchströmt, das über den Flansch 46 eintritt, durch die Trennwand 47 bis an den der höchsten Temperaturbelastung ausgesetzten Boden 41 geführt wird und dann über den Flansch 48 wieder austritt.

Eine erfindungsgemäße Vorrichtung zur Erzeugung von Synthesegas im industriellen Maßstab für z.B.

6634 m³/h CO + H₂ weist folgende Hauptabmessungen auf:
Innendurchmesser des Reformierteils (1): 800 m
Länge des Reformierteils: 10.000 mm
Anzahl der Reformerrohre (6): 19 mm
Hüllkreisdurchmesser (11): 750 mm
Innendurchmesser des Oxidationsteils (2): 1.000 mm
Länge der Mischkammer (9): 2.200 mm
Abstand h (Reformerrohrende bis Ebene der Zuführungseinrichtungen): 600 mm
Anzahl der Zuführungseinrichtungen: 6
Winkel $\alpha$: 15°
Winkel $\beta$: 0°
Reynoldszahl: 260.000.

Die Tabellen 1 und 2 weisen Betriebsdaten aus für Vorrichtungen gemäß Fig. 1 und 2. Dabei entspricht die Spaltennumerierung den Bezugszahlen in den entsprechenden Figuren.

Tabelle 1

|  | 3 | 7 | 12 | 13 | 23 |
|---|---|---|---|---|---|
| CO [Mol.-%] |  | 4,82 |  |  | 23,64 |
| CO₂ [Mol.-%] |  | 10,07 |  |  | 6,93 |
| H₂ [Mol.-%] |  | 54,75 |  |  | 67,33 |
| CH₄ [Mol.-%] | 96,74 | 28,88 |  | 96,74 | 0,96 |
| N₂ [Mol.-%] | 3,26 | 1,48 | 0,5 | 3,26 | 1,14 |
| O₂ [Mol.-%] |  |  | 99,5 |  |  |
| V_Trockengas kmol/h | 63,66 | 140,68 | 51,192 | 42,44 | 325,54 |
| V_H2O kmol/h | 153,96 | 118,84 |  |  | 133,77 |
| Temperatur [°C] | 370 | 730 | 200 | 370 | 613 |
| Druck [bar] | 43 | 41 | >41 | >41 | 40 |

Tabelle 2

| | 3 | 7 | 12 | 13 | 23 |
|---|---|---|---|---|---|
| CO [Mol.-%] | | 4,82 | | | 23,83 |
| $CO_2$ [Mol.-%] | | 10,07 | | | 6,89 |
| $H_2$ [Mol.-%] | | 54,75 | | | 67,61 |
| $CH_4$ [Mol.-%] | 96,74 | 28,88 | | 96,74 | 0,54 |
| $N_2$ [Mol.-%] | 3,26 | 1,48 | 0,5 | 3,26 | 1,13 |
| $O_2$ [Mol.-%] | | | 99,5 | | |
| $V_{Trockengas}$ kmol/h | 62,77 | 138,72 | 51,136 | 41,85 | 323,84 |
| $V_{H2O}$ kmol/h | 151,81 | 117,18 | | | 131,79 |
| Temperatur [°C] | 370 | 730 | 200 | 370 | 614 |
| Druck [bar] | 43 | 41 | >41 | >41 | 40 |

**Patentansprüche**

1. Vorrichtung zur Erzeugung von Synthesegas unter erhöhtem Druck aus Kohlenwasserstoffen, insbesondere Erdgas, Naphtha und/oder Raffineriegas in einem katalytischen, endothermen Reformierteil (1) mit einem zylindrischen Druckbehälter, und einer Vielzahl von außen beheizten mit Katalysator gefüllten Reformerrohren (6), wobei in die in einer Rohrbodenplatte (25) gehaltenen Reformerrohre (6) ein Gemisch aus Kohlenwasserstoffen und Wasserdampf eintritt und aus ihnen ein Reformiergas austritt und in einem anschließenden im Durchmesser zum vorgenannten Reformierteil vergrößerten Partial-Oxidationsteil (2) in Druckbehälterform mit geschlossenem Ende, in den die Reformerrohre (6) mit den freien Enden (8) hineinragen und in den das Reformiergas aus den Reformerrohren sowie zusätzliche Kohlenwasserstoffe und Sauerstoff oder sauerstoffenthaltendes Gas eingeführt werden, weiter behandelt wird, dadurch gekennzeichnet, daß in der Zylinderwand des Partial-Oxidationsteils (2) eine Mehrzahl von Zuführungseinrichtungen (10) für Kohlenwasserstoffe und/oder Sauerstoff oder sauerstoffenthaltendes Gas angebracht sind, deren Mittelachsen im Winkel zum Radialstrahl und parallel bis geneigt zur Radialebene ausgerichtet sind und deren Abstand zu den Ausströmenden der Reformerrohre so bemessen ist, daß im freien Partial-Oxidationsteil (2) eine rotierende Schlaufenströmung der Gase entsteht und das Produktgas außen abströmt, um sodann die Reformerrohre zu umströmen, zu beheizen und den Reformierteil (1) durch den Auslaßstutzen (19) zu verlassen.

2. Vorrichtungen nach Anspruch 1, dadurch gekennzeichnet, daß die Zuführungseinrichtungen (10) so in der Wand des Partial-Oxidationsteils (1) angebracht sind, daß die Austrittsrichtungen der Gasstrahlen

a) mit dem jeweiligen Radialstrahl einen Winkel von 1° bis 30° bilden, vorzugsweise 5° bis 20° und

b) zur Radialebene einen Winkel von +5° bis −15°, vorzugsweise 0° bis −10°, bilden,

c) daß der Abstand h der Verbindungslinie zweier Zuführungseinrichtungen zur Ebene der Reformerrohrenden (8) das 0,15- bis 1fache des Hüllkreisdurchmessers des Reformerrohrfeldes ist.

3. Vorrichtung nach Anspruch 1 und 2, dadurch gekennzeichnet, daß der Abstand h, der Durchmesser d einer Gasausströmöffnung am Reformerrohrende (8) sowie die größte Teilung t aller dieser Gasstromöffnungen der Bedingung genügen:

$t \leq d + 0,317 \times h$ worin

$$h = \frac{m_1}{m_0} \cdot \frac{\rho_0}{\rho_1} \cdot \frac{d}{0.32}$$

d = der innere Düsendurchmesser in der Austrittsebene der Reformerrohre,

$m_0$ = der Massenstrom, der einer Düse in der Austrittsebene der Reformerrohre entströmt,

$m_1$ = der Massenstrom, der durch den Strahl $m_0$ eingesaugt wird und

$\varphi_1$ und $\varphi_0$ die Dichten der jeweiligen Massenströme sind.

4. Vorrichtung nach Anspruch 1 bis 3, dadurch gekennzeichnet, daß die für die Strömungsbedingungen charakteristische Reynoldszahl der Gasstrahlen am Austritt der Reformerrohrenden (8) größer als $5 \times 10^3$, vorzugsweise größer als $5 \times 10^4$ ist.

5. Vorrichtung nach Anspruch 1 bis 4, dadurch gekennzeichnet, daß die für die Zuführungseinrichtungen charakteristische Reynoldszahl am Austritt der Düsen größer als $4 \times 10^3$, vorzugsweise größer

als $4 \times 10^4$ ist, gebildet aus einer fiktiven Ausströmungsgeschwindigkeit, einem fiktiven Durchmesser und der mittleren Zähigkeit der beteiligten Gase, wobei sich die fiktiven Größen aus der Impulsgleichheit und der Volumenstromgleichheit ergeben.

6. Vorrichtung nach Anspruch 1 bis 5, **dadurch gekennzeichnet**, daß der Innendurchmesser der Mischkammer (9) mindestens dem 1,1-fachen, aber höchstens dem 2-fachen des Hüllkreisdurchmessers des Reformerrohrfeldes entspricht und sich erst im Bereich des Reformerrohrfeldes reduziert.

7. Vorrichtung nach Anspruch 1 bis 6, **dadurch gekennzeichnet**, daß die Tiefe der Mischkammer so gewählt ist, daß die Reaktionspartner bzw. Reaktionsprodukte im wesentlichen 4 Sekunden darin verweilen.

8. Vorrichtung nach Anspruch 1, **dadurch gekennzeichnet**, daß zusätzlich Katalysator für eine katalytische Dampfreformierstufe nahe der Ebene der Reformerrohrenden (8) plaziert wird und daß diese Rohre oder ihre Fortsetzungen die Katalysatorschicht durchdringen.

9. Vorrichtung nach Anspruch 1 oder 8, **dadurch gekennzeichnet**, daß der Katalysator durch Körper vorzugsweise Füllkörper, getragen wird, die neben ihrer stützenden Funktion guten Wärmeübergang an die Rohre (6) und genügende Abkühlgeschwindigkeit gewährleisten.

10. Vorrichtung nach Anspruch 1 bis 9, **dadurch gekennzeichnet**, daß der Boden (41) der Zuführungseinrichtung (10) eine Mehrzahl von Düsenöffnungen (37, 40) aufweist.

## Claims

1. Vessel for the generation of synthesis gas at a higher pressure, using hydrocarbons, particularly natural gas, naphtha and/or refinery gas in a catalytic endothermic reforming section (1) with a cylindrical pressure vessel and a plurality of reformer tubes (6) heated externally and filled with a catalyst, a mixture of hydrocarbons and steam entering the reformer tubes positioned by means of a tubesheet (25), the reforming gas generated in said tubes flowing from the tubed section into the partial oxidation section (2) which has a larger diameter than the tubed section and the shape of a pressure vessel closed at one end, the ends (8) of the reformer tubes (6) penetrating into said section, and in which additional hydrocarbons and oxygen or oxygen-rich gas are mixed with the reforming gas for further treatment, characterized in that the cylinder wall of the partial oxidation section (2) has a plurality of inlet devices (10) for hydrocarbons and/or oxygen or oxygen-rich gas, the centre-lines of said devices being parallel to or inclined towards the radial stream and the radial plane, and said devices being spaced at a certain distance from the outlet ends of the reformer tubes such that a rotary vortex gas stream is produced and that the product gas stream flows to the reformer tubes to be heated and leaves the reforming section (1) via the outlet nozzle (19).

2. Vessel according to claim 1, characterized in that the inlet devices (10) are installed in the wall of partial oxidation section (1) such

  a) that the axes of the inlet gas streams and the related radial streams form an angle of 1° to 30°, preferably 5° to 20°, and

  b) that the axes of the inlet gas streams and the radial plane form an angle of +5° to −15°, preferably 0° to −10°,

  c) that the distance h from the reference line between two inlet devices to the plane of the reformer tube ends (8) is 0.15 to 1.0 x diameter of the enveloping circle of the reformer tube section.

3. Vessel according to claims 1 and 2, characterized in that distance h, diameter d of a gas outlet opening at the reformer tube end (8) and the max. pitch t of all gas outlet openings comply with the following requirement:

$$t \le d + 0.317 \times h$$

$$h = \frac{m_1}{m_0} \cdot \frac{\rho_0}{\rho_1} \cdot \frac{d}{0.32}$$

where:
d diameter of the opening in the plane of the reformer tube outlets
$m_0$ stream from an opening in the plane of the reformer tube outlets
$m_1$ gas stream produced with the aid of $m_0$
$\varphi_1$ and $\varphi_0$ densities of the streams involved.

4. Vessel according to claims 1 to 3, characterized in that the Reynolds number for the flow conditions of the gas streams at the outlet of the reformer tube ends (8) is $5 \times 10^3$, preferably $> 5 \times 10^4$.

5. Vessel according to claims 1 to 4, characterized in that the Reynolds number for the nozzle outlets of the inlet devices is $> 4 \times 10^3$, preferably $> 4 \times 10^4$, calculated on the basis of an assumed outlet velocity, an assumed diameter and a mean viscosity of the gases concerned, the assumed figures resulting from the uniformity of impulses and streams.

6. Vessel according to claims 1 to 5, characterized in that the inside diameter of mixing chamber 9 is at least 1.1 and max. 2 x diameter of the enveloping circle of the reformer tube section, the inside diameter being reduced within the reformer tube section.

7. Vessel according to claims 1 to 6, characterized in that the mixing chamber depth is selected such that the min. residence time of the reactants or reaction products is 4 s.

8. Vessel according to claim 1, characterized in that a catalyst for a catalytic steam reforming step is installed in the section near the reformer tube ends (8) and that said tubes or the tube extensions penetrate the catalyst bed.

9. Vessel according to claims 1 to 8, characterized in that the catalyst is supported by a layer, preferably a packing, which serves not only as a support but is also required for an adequate transfer of the heat onto reformer tubes (6) in order to ensure an adequate cooling time.

10. Vessel according to claims 1 to 9, characterized in that head (41) of inlet device (10) has a plurality of nozzle openings (37, 40).

## Revendications

1. Système de production de gaz de synthèse sous pression accrue à partir d'hydrocarbures, notamment de gaz naturel, de naphta et/ou de gaz raffinerie dans une zone de reformage catalytique endothermique (1), comprenant un réservoir cylindrique sous pression et une multitude de tubes de reformage (6) chauffés extérieurement et remplis d'un catalyseur, un mélange d'hydrocarbures et de vapeur d'eau entrant dans les tubes de reformage (6) fixés sur une plaque tubulaire (25), le traitement du gaz reformé sortant desdits tubes étant poursuivi dans une zone d'oxydation partielle (2) adjacente, qui est de diamètre supérieur à celui de la zone de reformage précitée et a la forme d'un réservoir sous pression, fermé à une extrémité, dans lequel pénètrent les extrémités libres (8) des tubes de reformage (6) et sont introduits le gaz reformé sortant des tubes de reformage ainsi que des hydrocarbures supplémentaires et de l'oxygène ou du gaz contenant de l'oxygène, caractérisé en ce que plusieurs dispositifs d'introduction (10) d'hydrocarbures et/ou d'oxygène ou de gaz contenant de l'oxygène sont fixés dans la paroi cylindrique de la zone d'oxydation partielle (2), leurs axes étant orientés pour former un angle avec le jet radial et être parallèles voire inclinés par rapport au plan radial, et la distance les séparant des extrémités de sortie des tubes de reformage ayant été dimensionnée en sorte que dans la zone d'oxydation partielle (2) les gaz circulent en tournant en tourbillon et que le gaz produit s'écoule vers l'extérieur, pour balayer ensuite les tubes de reformage, les réchauffer et quitter la zone de reformage (1) par la tubulure de sortie (19).

2. Systèmes selon la revendication 1, caractérisés en ce que les dispositifs d'introduction (10) sont fixés dans la paroi de la zone d'oxydation partielle (1) en sorte que les directions de sortie des jets de gaz

a) forment un angle de 1° à 30°, de préférence de 5° à 20°, avec le jet radial correspondant et

b) un angle de +5° à −15°, de préférence de 0° à −10°, avec le plan radial,

c) que la distance h de la ligne reliant deux dispositifs d'introduction au plan des extrémités des tubes de reformage (8) soit 0,15 à 1 fois le diamètre du cercle-enveloppe de la section des tubes de reformage.

3. Système selon les revendications 1 et 2, caractérisé en ce que la distance h, le diamètre d d'une ouverture de sortie de gaz à l'extrémité de tube de reformage (8) ainsi que le plus grand pas t de toutes ces ouvertures de sortie de gaz répondent à la condition:

$$t \leq d + 0,317 \times h$$

$$h = \frac{m_1}{m_0} \cdot \frac{\varphi_0}{\varphi_1} \cdot \frac{d}{0.32}$$

où:

d = le diamètre intérieur de tuyère dans le plan de sortie des tubes de reformage,

$m_0$ = le courant de masses, s'échappant d'une tuyère dans le plan de sortie des tubes de reformage,

$m_1$ = le courant de masses, aspiré par le jet $m_0$ et

$\varphi_1$ et $\varphi_0$ étant les densités des courants de masses correspondants.

4. Système selon les revendications 1 à 3, caractérisé en ce que le nombre de Reynolds caractéristique pour les conditions d'écoulement des jets de gaz à la sortie des extrémités des tubes de reformage (8) est supérieur à $5 \times 10^3$, de préférence supérieur à $5 \times 10^4$.

5. Système selon les revendications 1 à 4, caractérisé en ce que le nombre de Reynolds caractéristique pour les dispositifs d'introduction à la sortie des tuyères est supérieur à $4 \times 10^3$, de préférence supérieur à $4 \times 10^4$, calculé à partir d'une vitesse de sortie fictive, d'un diamètre fictif et de la viscosité moyenne des gaz concernés, les grandeurs fictives découlant de l'égalité des impulsions et des courants volumiques.

6. Système selon les revendications 1 à 5, caractérisé en ce que le diamètre intérieur de la chambre de mélange (9) correspond au moins à 1,1 fois et au plus à 2 fois le diamètre du cercle-enveloppe de la section des tubes reformage et qu'il ne diminue que dans la zone de la section des tubes de reformage.

7. Système selon les revendications 1 à 6, caractérisé en ce que la profondeur de la chambre de mélange est choisie en sorte que les réactants ou produits réactionnels y séjournent au moins 4 secondes.

8. Système selon la revendication 1, caractérisé en ce que du catalyseur pour un étage de reformage à la vapeur est en plus placé à proximité du plan des extrémités des tubes de reformage (8) et que ces tubes ou leurs prolongements traversent le lit catalytique.

9. Système selon la revendication 1 ou 8, caractérisé en ce que le catalyseur est porté par des corps, de préférence des corps de garnissage, qui assurent à côté de leur fonction de support une bonne transmission de la chaleur aux tubes (6) et une vitesse de refroidissement suffisante.

10. Système selon les revendications 1 à 9, caractérisé en ce que le fond (41) du dispositif d'introduction (10) est muni de plusieurs ouvertures de tuyères (37, 40).

Fig. 1

Fig. 2

EP 0 214 432 B1

Fig. 3

Fig. 4

Fig. 5